# FASCICULE DE BREVET EUROPEEN

(11) **EP 0 911 304 B1**
(45) Date de publication et mention de la délivrance du brevet: **01.09.2004**
(21) Numéro de dépôt: 98402662.5
(22) Date de dépôt: 26.10.1998
(51) Int. Cl.: C04B 14/22, C04B 26/10, C04B 26/26, C04B 28/02, E01C 7/08, E01C 7/35, E01F 9/04

(54) **Revêtements de circulation ou éléments connexés réfléchissants et composition correspondante**
Reflektierende Verkehrsflächen oder zugehörige Elemente sowie entsprechende Zusammensetzung
Reflecting surfaces associated with road traffic or related elements and corresponding composition

(30) Priorité: 27.10.1997 FR 9713452
(43) Date de publication de la demande: 28.04.1999
(73) Titulaire: COLAS, 92100 Boulogne-Billancourt (FR)
(72) Inventeur: Bense, Pierre, 94450 Limeil-Brevannes (FR)
(74) Mandataire: Bernasconi, Jean Raymond

(56) Documents cités:
- WO-A-95/22662
- BE-A- 544 423
- BE-A- 899 935
- CH-A- 323 853
- DE-A- 4 324 190
- GB-A- 2 279 957
- LU-A- 38 958
- US-A- 5 437 907
- CHEMICAL ABSTRACTS, vol. 107, no. 22, 30 novembre 1987 Columbus, Ohio, US; abstract no. 203967w, GUREVICH ET. AL: "raw mixture for producing refractory reflecting coating" page 361; XP000189340 & SU 1 296 544 A ("ORGTEKHSTROM")
- CHEMICAL ABSTRACTS, vol. 109, no. 20, 14 novembre 1988 Columbus, Ohio, US; abstract no. 175439w, FUKUDA: "concrete with lustrous surface" XP000056913 & JP 63 134583 A (FUKUYOSHI)

## Description

La présente invention concerne l'élaboration de voies de circulation telles que routes, pistes cyclables, voies piétonnières, etc... ou d'éléments de sécurité et/ou de signalisation connexes aux voies de circulation tels que glissières de sécurité en béton, bordures de trottoirs, bornes de signalisation, etc... possédant des propriétés réfléchissantes renforcées.

Elle concerne plus particulièrement une composition pour revêtements de voies de circulation ou pour éléments de sécurité et/ou de signalisation connexes permettant d'obtenir de telles propriétés.

Elle concerne encore les revêtements de voies de circulation et les éléments de sécurité et/ou de signalisation connexes obtenus à partir de ces compositions.

La sécurité en particulier la sécurité routière est une donnée fondamentale et pour attirer l'attention d'un usager, qu'il soit automobiliste, cycliste ou piéton, sur d'éventuels dangers ou tout simplement pour le guider, on doit mettre en évidence certaines voies ou parties de voies de circulation ou encore des éléments balisant ou protégeant des zones spécifiques.

Pour la différenciation des voies de circulation, on exploite en général les différentes couleurs pouvant être obtenues selon les types de revêtement (bitume, béton, etc.) ou encore la possibilité d'éclaircir le revêtement par l'emploi d'agrégat particulier, notamment des gravillons clairs.

Dans le domaine de la signalisation en particulier de la signalisation routière, on connaît des peintures ou bandes de marquages réfléchissantes contenant des microbilles de verres.

On a également proposé d'incorporer des billes de verres dans les revêtements pour chaussées.

Ces microbilles doivent présenter des caractéristiques spécifiques notamment de réflexion de la lumière et doivent avoir par exemple une forme définie pour obtenir un renvoi satisfaisant de la lumière telle que celle provenant de phares automobiles.

Ces microbilles doivent ainsi être fabriquées selon des procédés spécifiques onéreux, ce qui limite leurs applications notamment à des surfaces réduites.

On a également proposé d'utiliser des verres de récupération du type bouteilles pour l'élaboration de revêtements de chaussées par incorporation en surface à l'aide de rouleaux compresseurs, après l'élaboration proprement dite du revêtement lorsqu'il est encore souple.

Les bris de verres ainsi appliqués ne permettent cependant pas d'atteindre des propriétés réfléchissantes satisfaisantes en particulier dans des sites très peu éclairés.

De plus, ils risquent fortement d'être brisés par le trafic et rejetés en des lieux où ils ne pourront plus produire l'effet de réflexion.

L'objectif de la présente invention est de fournir un moyen d'améliorer la lisibilité et la visibilité des voies de circulation.

L'objectif de la présente invention est encore de fournir des revêtements pour voies de circulation ou des éléments de sécurité et/ou de signalisation connexes à propriétés photométriques renforcées.

Un autre objectif est aussi de fournir de tels revêtements ou éléments connexes à coût réduit.

A ces fins, l'invention a pour objet une composition pour revêtement de voies de circulation ou éléments de sécurité et/ou de signalisation connexes à propriétés réfléchissantes renforcées, caractérisée en ce qu'elle comprend 10 à 80 % en poids de débris de verre lesquels contiennent au moins 10 % en poids de débris de verre essentiellement réfléchissants de dimension inférieure à 20 mm.

L'invention a encore pour objet des revêtements de voies de circulation et des éléments de sécurité et/ou de signalisation connexes à propriétés réfléchissantes renforcées, caractérisés en ce qu'ils comprennent 10 à 80 % en poids de débris de verre lesquels contiennent au moins 10 % en poids de débris de verre essentiellement réfléchissants de dimension inférieure à 20 mm.

L'invention concerne également les revêtements et éléments de sécurité et/ou de signalisation connexes obtenus à partir des compositions précitées.

Selon l'invention, par débris de verre essentiellement réfléchissants on entend des débris de verre spéciaux présentant essentiellement des propriétés réfléchissantes par opposition aux débris de verre ordinaires qui sont transparents ou translucides et pour lesquels les propriétés de réflexion ne sont pas primordiales.

Les débris de verres spéciaux mis en oeuvre selon l'invention sont en général issus de verres qui ont subi un traitement, par exemple un traitement de métallisation, pour exalter leurs propriétés réfléchissantes.

Parmi les verres utilisables selon l'invention, on peut citer les miroirs classiques, les verres métallisés et les verres émaillés.

Les verres présentant au moins une surface métallisée, notamment les verres pour le bâtiment tel que le verre Antélio®, sont également utilisables selon l'invention, de même que les verres à inclusions métalliques comme ceux des lunettes arrières de véhicules munis d'un filament métallique pour dégivrage.

En variante, on peut envisager l'utilisation de verres cérames ou flammés, ou de verres pour automobiles tels que les verres colorés "anti-éblouissement" pour vitrage, ou les verres de sécurité de type Sécurit®.

Les verres utilisés selon l'invention peuvent provenir de déchets de fabrication ou encore de la récupération des matières à partir de véhicules, de la démolition de bâtiments, etc...

Lorsque le terme verre est utilisé seul, il désigne tout type de verres en mélange c'est-à-dire des mélanges de verres spéciaux ou des mélanges de verres ordinaires de type bouteille ou vitre avec des verres spéciaux, ou encore des verres d'écrans informatiques.

On peut aussi utiliser d'autres types de verres, notamment des verres d'écrans informatiques, en mélange avec des verres spéciaux.

Les verres, neufs ou de rebut, sont brisés et concassés par tout moyen connu jusqu'à obtenir des débris de dimension inférieure à 20 mm, de préférence de dimension allant de 2 à 10 mm et plus préférentiellement encore de 2 à 6 mm.

Selon l'invention, la composition peut contenir des mélanges de débris de verre ordinaires et des débris de verre spéciaux.

Elle contient de préférence de 20 à 50 % en poids de débris de verre.

Les débris de verres contiennent de préférence de 30 à 50 % en poids de débris de verre essentiellement réfléchissants tels que définis ci-dessus.

On adaptera les proportions des débris de verres spéciaux selon le taux de réfléchissement que l'on souhaite obtenir.

Les propriétés réfléchissantes considérées selon l'invention concernent la réflexion de la lumière du domaine du visible, notamment la lumière d'éclairage (notamment éclairage urbain, éclairage de tunnels...), la lumière de véhicules (phares...) ou la lumière naturelle.

L'invention concerne les revêtements de surfaces sensiblement horizontales telles que les voies de circulation, notamment les chaussées, les pistes cyclables, les trottoirs et autres allées piétonnières, les parc et emplacements de stationnement.

On procède alors à l'élaboration classique de la composition en prévoyant l'incorporation supplémentaire des débris de verres.

La composition pour revêtement peut ainsi comprendre un liant bitumineux notamment pour les bétons bitumineux auquel cas on enrobe, à chaud ou à froid, les débris de verre comme le sont classiquement les roches naturelles.

Pour ce type de revêtement, on utilise avantageusement des bétons bitumineux minces, par exemple de l'ordre de 2 à 4 centimètres, ou encore des bétons bitumineux drainants.

Dans le cas d'un liant bitumineux à froid, il peut s'agir de revêtements du type enrobé coulé à froid (ECF), les débris de verres étant enrobés d'émulsion de bitume et le mélange répandu liquide sur la voie de circulation.

On peut aussi prévoir de répandre la composition classique de l'enrobé à froid puis on disperse en surface les débris de verres avant durcissement du revêtement.

Il peut s'agir encore de revêtements obtenus par enduits superficiels. On gravillonne alors sur la couche bitumineuse de base partiellement ou totalement avec les débris de verres tels que précités en complément ou en remplacement des gravillons habituels.

La composition peut comprendre également un liant hydraulique tel que dans le cas des mortiers de ciment et des bétons de ciment. Une partie du sable et/ou des granulats est simplement remplacée par les débris de verres prévus selon l'invention.

On peut avantageusement prévoir une incorporation ultérieure, notamment par dispersion ou pulvérisation des débris de verres après mise en place du béton et avant son durcissement.

L'invention s'applique également à des composition à liant de type polymère ou résine synthétique pouvant être utilisés pour certains revêtements notamment voies piétonnières.

L'invention concerne également les surfaces sensiblement verticales, par opposition aux précédentes, rencontrées essentiellement dans les éléments de sécurité et/ou de signalisation connexes aux voies de circulation.

Il s'agit par exemple de glissières de sécurité en béton, bordures de trottoirs, plots de signalisation, bornes centrales ou bandes de séparation de voies spécifiques comme les voies pour les autobus.

Les débris de verres selon l'invention peuvent être incorporés à la composition de base comme décrit ci-dessus dans le cas des revêtements de surfaces sensiblement horizontales.

Les éléments peuvent être élaborés sur sites ou préfabriqués comme cela est fait classiquement.

Selon le type d'élément et notamment ses dimensions, on peut prévoir une incorporation des débris de verres dans la masse ou seulement en surface par exemple par addition ultérieure ou incorporation localisée avant moulage.

Dans le cas de glissières de sécurité en béton, on peut avantageusement prévoir l'incorporation des débris de verres après coulage proprement dit de la glissière lorsque le béton n'a pas encore durci.

On peut avantageusement prévoir de procéder à un traitement préalable des débris de verre pour faciliter leur adhérence au liant utilisé (bitume, ciment ou résine). Ce traitement peut par exemple être réalisé avec des agents d'adhérence tels que des silanes.

Par ailleurs, on peut avantageusement prévoir un traitement de surface final du revêtement ou de l'élément après sa formation, destiné à laisser apparaître en surface les débris de verre qui auparavant étaient recouverts de liant.

Le trafic peut aussi participer à cet effet.

L'élaboration d'éléments de sécurité et/ou de signalisation connexes aux voies de circulation à propriétés réfléchissantes renforcées selon l'invention permet avantageusement une meilleure exploitation des propriétés photométriques du matériau car l'angle entre la surface éclairée et la direction de la source lumineuse, par exemple des phares de véhicules, est beaucoup plus important.

A titre d'exemple on peut indiquer que les phares automobiles éclairent la route sous un angle d'environ 2° en fonctionnement normal alors que par rapport aux bordures de trottoirs, l'angle est compris entre 60 et 120°.

Selon un de ses aspects, l'invention est donc relative aux revêtements de voies de circulation et aux éléments de sécurité et/ou de signalisation connexes comprenant des débris de verres selon les proportions et dimensions précitées pour les compositions.

L'invention présente notamment les avantages suivants :
- du point de vue de la sécurité routière, elle permet d'améliorer la visibilité de la surface de circulation lorsque l'éclairage est insuffisant ou en des lieux présentant un danger (carrefours, virages, passages piétons, etc...)
- du point de vue de l'éclairage artificiel, elle permet de l'économiser ;
- du point de vue de l'orientation et du balisage des voies, elle permet la distinction des voies réservées telles que couloirs d'autobus, pistes cyclables, etc.
- du point de vue économique, elle permet d'obtenir un effet réfléchissant satisfaisant avec relativement peu de matière qui de plus ne nécessite pas de fabrication spécifique et est en général difficilement recyclable ;
- du point de vue esthétique, elle peut permettre également de mettre en valeur certaines zones (places, circuits touristiques, etc.).

L'invention va être décrite en référence aux exemples de compositions donnés ci-dessus à titre illustratif et non limitatif :

### EXEMPLES

### Exemple 1 :Béton pour bordures de trottoir

On prépare un béton de composition suivante :
- gravillons de rivière 5/15 1300 kg
- sable de verres spéciaux 0/5 300 kg
- sable roulé de rivière 300 kg
- ciment CPA 55 150 kg
- eau et adjuvant 150 l
Le mélange est moulé pour obtenir des bordures bétons préfabriquées.

### Exemple 2 : Bordures d'autoroute préfabriquées pour le guidage de l'eau, en matière synthétique, du type général décrit dans la demande EP-A-0648896.

On prépare le mélange suivant :
- particules de caoutchouc de récupération 2/4 56 % en poids
- verres spéciaux concassés 4/6 37 % en poids
- résine de polyuréthanne 7 % en poids

Le mélange est aggloméré et moulé comme décrit dans la demande de brevet susmentionnée.

### Exemple 3 : Enrobé à chaud semi-grenu 0/10

On prépare le mélange suivant :
- gravillons de diorite 6/10 23 % en poids
- verres spéciaux concassés 2/6 38 % en poids
- sable de diorite 0/2 37 % en poids
- fines d'apport
   (poussières de pierres) 2 % en poids
- bitume 5,8 ppc (parties pour cent)

L'enrobé est compacté à chaud de façon classique sur une épaisseur de 5 cm.

### Exemple 4: Enrobé très mince à chaud 0/6

On prépare le mélange suivant :
- gravillons de diorite 4/6 65 % en poids
- verres spéciaux concassés 0/6 30 % en poids
- fines d'apport 5 % en poids
- bitume 5,5 ppc

L'enrobé est compacté à chaud sur une épaisseur de 2 cm.

### Exemple 5:Enrobé coulé à froid

On prépare le mélange suivant :
- sable de quartzite 50 % en poids
- sable de verres spéciaux 0/6 50 % en poids
- émulsion de bitume à 65 % 12 ppc
- eau d'apport avec additif 2 ppc

On étale le mélange liquide obtenu sur une épaisseur de 1 à 2 centimètres et on le laisse sécher 15 à 30 minutes avant de remettre le trafic.

## Revendications

1. Composition pour revêtement de voies de circulation ou éléments de sécurité et/ou de signalisation connexes à propriétés réfléchissantes renforcées, **caractérisée en ce qu'**elle comprend 10 à 80 % en poids de débris de verre lesquels contiennent au moins 10 % en poids de débris de verre essentiellement réfléchissants possédant au moins une surface métallisée ou émaillée ou contenant des inclusions métalliques, de dimension inférieure à 20 mm.

2. Composition selon la revendication 1, **caractérisée en ce qu'**elle comprend 20 à 50 % en poids de débris de verre.

3. Composition selon l'une quelconque des revendications précédentes, **caractérisée en ce que** les débris de verre contiennent entre 30 et 50 % de débris de verre essentiellement réfléchissants.

4. Composition selon l'une quelconque des revendications précédentes, **caractérisée en ce que** les débris de verre ont une dimension allant de 2 à 10 mm, de préférence de 2 à 6 mm.

5. Composition selon l'une quelconque des revendications précédentes, **caractérisée en ce que** les débris de verre essentiellement réfléchissants sont des débris de verre du type miroir, du type verre pour le bâtiment tel que le verre Antélio® ou du type verre pour vitrage automobile.

6. Composition selon l'une quelconque des revendications précédentes, **caractérisée en ce qu'**elle comprend un liant bitumineux, notamment pour béton bitumineux, enrobé coulé à froid ou enduit superficiel, destiné au revêtement de voies de circulation.

7. Composition selon l'une quelconque des revendications 1 à 5, **caractérisée en ce qu'**elle comprend un liant hydraulique notamment pour mortier de ciment ou pour béton de ciment destiné au revêtement de voies de circulation ou à la fabrication d'éléments de sécurité et/ou de signalisation connexes aux voies de circulation.

8. Composition selon l'une quelconque des revendications 1 à 5, **caractérisée en ce qu'**elle comprend un liant polymère ou résine synthétique destiné au revêtement de voies de circulation ou à la fabrication d'éléments de sécurité et/ou de signalisation connexes aux voies de circulation.

9. Composition selon l'une quelconque des revendications précédentes, **caractérisée en ce que** les débris de verre ont été préalablement traités avec un agent d'adhérence.

10. Revêtement pour voies de circulation, notamment routes, pistes cyclables, trottoirs et voies piétonnières, parc ou emplacement de stationnement, du type à liant bitumineux, hydraulique ou polymère, présentant des propriétés réfléchissantes renforcées, **caractérisé en ce qu'**il comprend 10 à 80 % en poids de débris de verre lesquels contiennent au moins 10 % en poids de débris de verre essentiellement réfléchissants possédant au moins une surface métallisée ou émaillée ou contenant des inclusions métalliques, de dimension inférieure à 20 mm.

11. Elément de sécurité et/ou de signalisation connexe aux voies des circulation, notamment glissière de sécurité, bordure de trottoirs , borne, du type à liant hydraulique ou polymère, **caractérisé en ce qu'**il comprend 10 à 80 % en poids de débris de verre lesquels contiennent au moins 10 % en poids de débris de verre essentiellement réfléchissants possédant au moins une surface métallisée ou émaillée ou contenant des inclusions métalliques, de dimension inférieure à 20 mm.

12. Revêtement ou élément selon la revendication 10 ou 11, **caractérisé en ce qu'**il comprend 20 à 50 % en poids de débris de verre.

13. Revêtement ou élément selon l'une quelconque des revendications 10 à 12, **caractérisé en ce que** les débris de verre contiennent entre 30 et 50 % de débris de verre essentiellement réfléchissants.

14. Revêtement ou élément selon l'une quelconque des revendications 10 à 13, **caractérisé en ce que** les débris de verre ont une dimension allant de 2 à 10 mm, de préférence de 2 à 6 mm.

15. Revêtement ou élément selon l'une quelconque des revendications 10 à 14, **caractérisé en ce que** les débris de verre essentiellement réfléchissants sont choisis parmi ceux mentionnés à la revendication 5.

16. Revêtement ou élément selon l'une quelconque des revendications 10 à 13, **caractérisé en ce qu'**il est obtenu à partir d'une composition selon l'une quelconque des revendications 1 à 9.

17. Revêtement ou élément selon l'une quelconque des revendications 10 à 16, **caractérisé en ce qu'**il présente des débris de verre essentiellement réfléchissants au moins dans sa couche superficielle.

18. Revêtement ou élément selon l'une quelconque des revendications 10 à 17, **caractérisé en ce que** les débris de verre ont été préalablement traités par un agent d'adhérence.

## Patentansprüche

1. Zusammensetzung für Beläge von Verkehrswegen oder zugeordnete Sicherungs- und/oder Markierungselemente mit verstärkten reflektierenden Eigenschaften, **dadurch gekennzeichnet, daß** sie 10 bis 80 Gew.-% im wesentlichen reflektierende Glassplitter, die mindestens eine metallisierte oder emaillierte Fläche besitzen oder Metalleinschlüsse enthalten, mit einer Abmessung von weniger als 20 mm umfaßt.

2. Zusammensetzung nach Anspruch 1, **dadurch gekennzeichnet, daß** sie 20 bis 50 Gew.-% Glassplitter umfaßt.

3. Zusammensetzung nach einem der vorhergehenden Ansprüche, **dadurch gekennzeichnet, daß** die Glassplitter zwischen 30 und 50% im wesentlichen reflektierende Glassplitter enthalten.

4. Zusammensetzung nach einem der vorhergehenden Ansprüche, **dadurch gekennzeichnet, daß** die Glassplitter eine Abmessung von 2 bis 10 mm, vorzugsweise von 2 bis 6 mm, haben.

5. Zusammensetzung nach einem der vorhergehenden Ansprüche, **dadurch gekennzeichnet, daß** die im wesentlichen reflektierenden Glassplitter Glassplitter aus Spiegelglas, Bauglas wie das Glas Antelio® oder KFZ-Fensterglas sind.

6. Zusammensetzung nach einem der vorhergehenden Ansprüche, **dadurch gekennzeichnet, daß** sie ein bituminöses Bindemittel insbesondere für Asphaltbeton, Kalteinbaudecke oder Oberflächenüberzug umfaßt, das für Straßenbeläge bestimmt ist.

7. Zusammensetzung nach einem der Ansprüche 1 bis 5, **dadurch gekennzeichnet, daß** sie ein hydraulisches Bindemittel insbesondere für Zementmörtel oder für Zementbeton umfaßt, das für den Belag von Verkehrswegen oder für die Herstellung von den Verkehrswegen zugeordneten Sicherungsund/oder Markierungselementen bestimmt ist.

8. Zusammensetzung nach einem der Ansprüche 1 bis 5, **dadurch gekennzeichnet, daß** sie ein polymeres Bindemittel oder synthetisches Harz umfaßt, das für den Belag von Verkehrswegen oder für die Herstellung von den Verkehrswegen zugeordneten Sicherungs- und/oder Markierungselementen bestimmt ist.

9. Zusammensetzung nach einem der vorhergehenden Ansprüche, **dadurch gekennzeichnet, daß** die Glassplitter zuvor mit einem Haftmittel behandelt wurden.

10. Belag für Verkehrswege, insbesondere Straßen, Radwege, Fußwege bzw. Bürgersteige und Fußgängerzonen, Parks oder Parkplätze, mit einem bituminösen, hydraulischen oder polymeren Bindemittel, der verstärkte reflektierende Eigenschaften besitzt, **dadurch gekennzeichnet, daß** er 10 bis 80 Gew.-% Glassplitter enthält, die mindestens 10 Gew.-% im wesentlichen reflektierende Glassplitter, die mindestens eine metallisierte oder emaillierte Fläche besitzen oder Metalleinschlüsse enthalten, mit einer Abmessung von weniger als 20 mm enthalten.

11. Verkehrswegen zugeordnetes Sicherungs- oder Markierungselement, insbesondere Leitplanke, Bürgersteigrand, Begrenzung, mit hydraulischem oder polymerem Bindemittel, **dadurch gekennzeichnet, daß** es 10 bis 80 Gew.-% Glassplitter umfaßt, die mindestens 10 Gew.-% im wesentlichen reflektierende Glassplitter, die mindestens eine metallisierte oder emaillierte Fläche aufweisen oder Metalleinschlüsse enthalten, mit einer Abmessung von weniger als 20 mm enthalten.

12. Belag oder Element nach Anspruch 10 oder 11, **dadurch gekennzeichnet, daß** er bzw. es 20 bis 50 Gew.-% Glassplitter umfaßt.

13. Belag oder Element nach einem der Ansprüche 10 bis 12, **dadurch gekennzeichnet, daß** die Glassplitter 30 bis 50 % im wesentlichen reflektierende Glassplitter enthalten.

14. Belag oder Element nach einem der Ansprüche 10 bis 13, **dadurch gekennzeichnet, daß** die Glassplitter eine Abmessung von 2 bis 10 mm, vorzugsweise von 2 bis 6 mm, besitzen.

15. Belag oder Element nach einem der Ansprüche 10 bis 14, **dadurch gekennzeichnet, daß** die im wesentlichen reflektierenden Glassplitter aus den in Anspruch 5 genannten Glassplittern ausgewählt sind.

16. Belag oder Element nach einem der Ansprüche 10 bis 13, **dadurch gekennzeichnet, daß** er bzw. es aus einer Zusammensetzung nach einem der Ansprüche 1 bis 9 hergestellt ist.

17. Belag oder Element nach einem der Ansprüche 10 bis 16, **dadurch gekennzeichnet, daß** er bzw. es im wesentlichen reflektierende Glassplitter mindestens in seiner Oberflächenschicht aufweist.

18. Belag oder Element nach einem der Ansprüche 10 bis 17, **dadurch gekennzeichnet, daß** die Glassplitter zuvor mit einem Haftmittel behandelt wurden.

## Claims

1. Compound for coating traffic routes or related safety and/or signalling elements having improved reflective properties, **characterised in that** it comprises from 10 to 80% by weight of waste glass products which contain at least 10% by weight of substantially reflective waste glass products having at least one metallic or enamelled surface or containing metal inclusions measuring less than 20mm.

2. Compound according to claim 1, **characterised in that** it comprises from 20 to 50% by weight of waste glass products.

3. Compound according to any one of the preceding claims, **characterised in that** the waste glass products contain between 30 and 50% of substantially reflective waste glass products.

4. Compound according to any one of the preceding claims, **characterised in that** the waste glass products have a dimension of from 2 to 10mm, preferably of from 2 to 6mm.

5. Compound according to any one of the preceding claims, **characterised in that** the substantially reflective waste glass products are waste glass products of the mirror type, of the glass type for the building trade, such as Antélio® glass, or of the glass type for motor vehicle windows.

6. Compound according to any one of the preceding claims, **characterised in that** it comprises a bitumen binder, in particular for bitumen concrete, cold-poured coating material or surface coating, which is intended for coating traffic routes.

7. Compound according to any one of claims 1 to 5, **characterised in that** it comprises a hydraulic binder, in particular for cement mortar or for cement concrete, which binder is intended for coating traffic routes or for producing safety and/or signalling elements relating to the traffic routes.

8. Compound according to any one of claims 1 to 5, **characterised in that** it comprises a polymer binder or synthetic resin which is intended for coating traffic routes or for producing safety and/or signalling elements relating to the traffic routes.

9. Compound according to any one of the preceding claims, **characterised in that** the waste glass products have been treated beforehand with an adhesive bonding agent.

10. Coating for traffic routes, in particular roads, cycle paths, pavements and pedestrian walkways, car parks or parking spaces, of the type having a bitumen, hydraulic or polymer binder, and having improved reflective properties, **characterised in that** it comprises from 10 to 80% by weight of waste glass products which contain at least 10% by weight of substantially reflective waste glass products having at least one metallic or enamelled surface or containing metal inclusions measuring less than 20mm.

11. Safety and/or signalling element relating to traffic routes, in particular crash barriers, kerbstones, bollards, of the type having a hydraulic or polymer binder, **characterised in that** it comprises from 10 to 80% by weight of waste glass products which contain at least 10% by weight of substantially reflective waste glass products having at least one metallic or enamelled surface or containing metal inclusions measuring less than 20mm.

12. Coating or element according to claim 10 or 11, **characterised in that** it comprises from 20 to 50% by weight of waste glass products.

13. Coating or element according to any one of claims 10 to 12, **characterised in that** the waste glass products contain between 30 and 50% of substantially reflective waste glass products.

14. Coating or element according to any one of claims 10 to 13, **characterised in that** the waste glass products have a dimension of from 2 to 10mm, preferably of from 2 to 6mm.

15. Coating or element according to any one of claims 10 to 14, **characterised in that** the substantially reflective waste glass products are selected from those mentioned in claim 5.

16. Coating or element according to any one of claims 10 to 13, **characterised in that** it is obtained starting from a compound according to any one of claims 1 to 9.

17. Coating or element according to any one of claims 10 to 16, **characterised in that** it has substantially reflective waste glass products, at least in the surface layer thereof.

18. Coating or element according to any one of claims 10 to 17, **characterised in that** the waste glass products have been treated beforehand with an adhesive bonding agent.
